# EUROPEAN PATENT APPLICATION

(11) **EP 4 579 786 A1**
(43) Date of publication of application: **02.07.2025**
(21) Application number: 24222058.0
(22) Date of filing: 20.12.2024
(51) Int. Cl.: H01M 4/131, H01M 4/525, H01M 4/62, H01M 10/0525

(54) **ELECTRODE, SECONDARY BATTERY, AND ELECTRIC DEVICE**

(30) Priority: 28.12.2023 CN 202311852256
(71) Applicant: BYD Company Limited, Shenzhen, Guangdong 518118 (CN)
(72) Inventor: QIU, Zhaozheng, Shenzhen, 518118 (CN); LIU, Zhengjiao, Shenzhen, 518118 (CN); CHANG, Xiaoya, Shenzhen, 518118 (CN)
(74) Representative: Mathys & Squire

(57) **Abstract**

The present disclosure provides an electrode, a secondary battery, and an electric device. The electrode comprises a lithium replenishment layer. The lithium replenishment layer comprises a lithium replenishment agent and a conductive agent, and the ratio of the total surface area of the conductive agent in the lithium replenishment layer to the total surface area of the lithium replenishment agent in the lithium replenishment layer is (0.5-5):1. The ratio of the surface areas of the lithium replenishment agent and the conductive agent in the lithium replenishment layer meet a certain condition, such that the lithium replenishment layer not only achieves a good lithium replenishment effect, but also has good conductivity.

## Description

### FIELD

The present disclosure relates to the technical field of batteries, and specifically to an electrode, a secondary battery, and an electric device.

### BACKGROUND

With the popularization of new energy technologies, a higher requirement is raised for the energy density of lithium secondary batteries. To solve the above problems, lithium replenishment for the battery is performed. A lithium replenishment agent can release active lithium ions during the first charging process of the battery, to compensate the irreversible lithium loss of the battery, and improve the cycle life of the battery. In related art, a separate lithium replenishment layer is arranged on an electrode to optimize the lithium replenishment effect. However, the existing lithium replenishment layer often has a poor conductivity, affecting the rate performance of the battery.

### SUMMARY

In view of this, an embodiment of the present disclosure provides an electrode, having a lithium replenishment layer containing a lithium replenishment agent and a conductive agent where the total surface area of the lithium replenishment agent and the total surface area of the conductive agent in the lithium replenishment layer meet a certain condition, such that the lithium replenishment layer is not only able to achieve a good lithium replenishment effect, but also have good conductivity.

In a first aspect, an embodiment of the present disclosure provides an electrode, which comprises a current collector and an electrode material layer and a lithium replenishment layer laminated on a surface of the current collector. The lithium replenishment layer comprises a lithium replenishment agent and a conductive agent. The ratio of the total surface area of the conductive agent in the lithium replenishment layer to the total surface area of the lithium replenishment agent in the lithium replenishment layer is (0.5-5): 1.

By controlling the ratio of the total surface area of the conductive agent to the total surface area of the lithium replenishment agent in the range of (0.5-5):1, a conductive network can be established in the lithium replenishment layer, to increase the electronic conductivity of the lithium replenishment layer, and improve the rate performance of the battery. Additionally, the uniformity of the lithium replenishment layer can be improved, which promotes the mechanical strength of the lithium replenishment layer. Therefore, the lithium replenishment layer is unlikely to be separated and peeled from the electrode active material during the charging and discharging cycle of the battery, thus promoting the cycle stability of the battery. Based on the inherent effect of the lithium replenishment agent, additional active lithium ions can be provided for the battery, to compensate the irreversible active lithium ion loss of the battery, improve the energy density of the battery, and extend the cycle life of the battery.

Optionally, the ratio of the total surface area of the conductive agent to the total surface area of the lithium replenishment agent is (0.8-3): 1.

Optionally, in the lithium replenishment layer, the content in percent by weight of the lithium replenishment agent ranges from 40% to 80%, and the content in percent by weight of the conductive agent ranges from 1.5% to 15%.

Optionally, in the lithium replenishment layer, the weight ratio of the conductive agent to the lithium replenishment agent is in the range of 1 :(3-50).

Further, the lithium replenishment layer further contains a binder and a dispersant. In the lithium replenishment layer, the content in percent by weight of the binder ranges from 2% to 15%, and the content in percent by weight of the dispersant ranges from 0.3% to 10%.

Optionally, the lithium replenishment agent has a particle size ranging from 1 µm to 15 µm.

Optionally, the size of the conductive agent in at least one dimension is less than or equal to 200 nm.

Optionally, the material of the lithium replenishment layer is dispersed in a solvent to obtain a slurry. Within 72 hrs, the slurry has a viscosity changerate of less than 23% at room temperature and/or a change rate of light intensity backscattered by the slurry of less than 10%. The solvent is at least one selected from water, N-methylpyrrolidone, N,N-dimethylformamide, ethanol, isopropanol, acetone, tetrahydrofuran, dimethylformamide, toluene or n-hexane.

Optionally, the thickness of the lithium replenishment layer ranges from 1 µm to 15 µm, and the thickness of the electrode material layer ranges from 40 µm to 120 µm.

Optionally, the lithium replenishment layer meets at least one of:
(1) The slurry with a solid content of 10% obtained by dispersing the material of the lithium replenishment layer in a solvent has a viscosity ranging from 150mPa·s to 400 mPa s at room temperature.
(2) The slurry with a solid content of 16% obtained by dispersing the material of the lithium replenishment layer in a solvent has a viscosity ranging from 200 mPa·s to 500 mPa s at room temperature.
(3) The slurry with a solid content of 20% obtained by dispersing the material of the lithium replenishment layer in a solvent has a viscosity ranging from 300 mPa·s to 650 mPa s at room temperature.
(4) The slurry with a solid content of 25% obtained by dispersing the material of the lithium replenishment layer in a solvent has a viscosity ranging from 400 mPa·s to 1000 mPa s at room temperature.
(5) The slurry with a solid content of 30% obtained by dispersing the material of the lithium replenishment layer in a solvent has a viscosity ranging from 480 mPa·s to 1500 mPa s at room temperature. The solvent is at least one selected from water, N-methylpyrrolidone, N,N-dimethylformamide, ethanol, isopropanol, acetone, tetrahydrofuran, dimethylformamide, toluene or n-hexane.

Optionally, the electrode further comprises a current collector and an electrode material layer, where the lithium replenishment layer, the electrode material layer and the current collector are laminated.

In a second aspect, the present disclosure provides a secondary battery, which comprises an electrode provided in the embodiment of the present disclosure. Due to the use of the electrode according to the embodiment of the present disclosure, the secondary battery has high energy density, a long cycle life, and good rate performance.

Optionally, the secondary battery comprises a positive electrode, a negative electrode, and an electrolyte solution and a separator located between the positive and negative electrodes. The positive electrode is an electrode provided in the first aspect of the present disclosure.

Optionally, in the lithium replenishment layer of the electrode where the lithium replenishment agent is delithiated, the content in percent by weight of the residue after delithiation of the lithium replenishment agent ranges from 40% to 93%, and the content in percent by weight of the conductive agent is 5% to 30%.

In a third aspect, the present disclosure provides an electric device, which comprises a secondary battery provided in the second aspect of the present disclosure. As the secondary battery provided in the embodiment of the present disclosure is used to power to the electric device, the electric device has a long battery life and also certain fast charging performance, thus having high market competitiveness.

Optionally, the electric device comprises, butis notlimited to, 3C-type electronic devices, and electric vehicles including, but is not limited to, new energy vehicles, and force-helping bicycles, etc.

### DETAILED DESCRIPTION

An embodiment ofthe present disclosure provides an electrode, which comprises a lithium replenishment layer. The lithium replenishment layer comprises a lithium replenishment agent and a conductive agent. The ratio of the total surface area of the conductive agent in the lithium replenishment layer to the total surface area of the lithium replenishment agent in the lithium replenishment layer is (0.5-5): 1.

By controlling the ratio of the total surface area of all the conductive agent in the lithium replenishment layer to the total surface area of all the lithium replenishment agent in the lithium replenishment layer in the range of (0.5-5):1, the lithium replenishment agent and the conductive agent are caused to have a sufficient contact area directly, and a sufficient amount of the conductive agent coated on the surface of the lithium replenishment agent particles electrically connects the contiguous lithium replenishment agent, and forms a conductive network in the lithium replenishment layer, to increase the electronic conductivity of the lithium replenishment layer, and improve the rate performance of the battery. Additionally, by controlling the surface area ratio of the two in the above range, the uniformity of the lithium replenishment layer is improved, which promotes the mechanical strength of the lithium replenishment layer, and makes it uneasy to be peeled off. Therefore, the lithium replenishment layer is unlikely to be separated and peeled from the electrode active material during the charging and discharging cycle of the battery, thus promoting the cycle stability of the battery. Based on the inherent effect of the lithium replenishment agent, additional active lithium ions can be provided for the battery, to compensate the irreversible active lithium ion loss of the battery, improve the energy density of the battery, and extend the cycle life of the battery.

Therefore, the electrode can be used to provide a battery having a high energy density, good rate performance, and a long cycle life.

In the embodiments of the present disclosure, the total surface area of the conductive agent and the total surface area of the lithium replenishment agent can be tested by using a scanning laser particle size analyzer and a specific surface meter in combination, and then the ratio of their total surface areas is further calculated. Particularly, m grams of the material of the lithium replenishment layer is dispersed in a solvent, to remove the binder potentially existing in the lithium replenishment layer. The obtained solid is washed and dried, and then the solid is weighed and recorded as m₁. A gas adsorption curve of the solid is determined by a gas adsorption and desorption instrument, and the specific surface area A m²/g of the material of the lithium replenishment layer is calculated by combining with a BET model. The total surface of the material of this part of lithium replenishment layer S=m₁*A, unit: m². A particle size distribution curve of the lithium replenishment agent as a solid is determined by a laser particle size analyzer, and integrated, to obtain the total surface area S₁ m² of the lithium replenishment agent. Then, the total surface area of the conductive agent S₂=S-S₁. Then, the ratio of the total surface area of the conductive agent to the total surface area of the lithium replenishment agent is S₂/S₁. It should also be noted that, the solvent comprises, but is not limited to, at least one of N-methylpyrrolidone, N,N-dimethylformamide, ethanol, isopropanol, acetone, tetrahydrofuran, dimethylformamide, toluene or n-hexane. Choices can be made by those skilled in the art according to actual needs. The test conditions by the gas adsorption and desorption instrument comprise maintaining the gas desorption time ≥30min and the gas desorption temperature ≥100°C during the test, to obtain the gas adsorption and desorption curve of the solid and to further obtain A. Additionally, the laser particle size analyzer can simultaneously measure the particle size distribution curves of the lithium replenishment agent and the conductive agent. The peaks of the particle size distribution curves of the lithium replenishment agent and the conductive agent can be clearly separated. Generally, the particle size of the conductive agent is significantly smaller than that of the lithium replenishment agent.

In some embodiments of the present disclosure, the electrode further comprises a current collector and an electrode material layer, where the lithium replenishment layer, the electrode material layer and the current collector are laminated. In the embodiments of the present disclosure, two opposite side surfaces of the current collector are arranged with the laminated electrode material layer and lithium replenishment layer; or a single side surface of the current collector is arranged with the laminated electrode material layer and lithium replenishment layer, and the other side surface is arranged with the electrode material layer. However, the present disclosure is not limited thereto. In the embodiments of the present disclosure, the lithium replenishment layer is arranged between the current collector and the electrode material layer, or the electrode material layer is arranged between the lithium replenishment layer and the current collector, or even the lithium replenishment layer and the electrode material layer are laminated alternately. However, the present disclosure is not limited thereto.

In the embodiments of the present disclosure, the ratio of the total surface area of the conductive agent to the total surface area of the lithium replenishment agent in the lithium replenishment layer may be 0.5:1, 0.8:1, 1:1, 1.2:1, 1.5:1, 1.8:1, 2:1,2.2:1, 2.5:1, 2.8:1, 3:1, 3.2:1, 3.5:1, 3.8:1, 4:1, 4.2:1, 4.5:1, 4.8:1, or 5:1. If the above ratio is too large ortoo small, the adsorption and coating of the conductive agent on the surface of the lithium replenishment agent are compromised, and the conductive agent cannot fully electrically conductively bridge the lithium replenishment agent, so that a conductive network cannot be established in the lithium replenishment layer, and the electronic conductivity of the lithium replenishment layer cannot be improved.

In some embodiments of the present disclosure, the ratio of the total surface area of the conductive agent in the lithium replenishment layer to the total surface area of the lithium replenishment agent in the lithium replenishment layer is (0.8-3):1. For example, the ratio of the total surface area of the conductive agent in the lithium replenishment layer to the total surface area of the lithium replenishment agent in the lithium replenishment layer may be, but is not limited to, 0.8:1, 0.9:1, 1:1, 1.1:1, 1.2:1, 1.3:1, 1.4:1, 1.5:1, 1.6:1, 1.7:1, 1.8:1, 1.9:1,2:1,2.1:1,2.2:1,2.3:1, 2.4:1, 2.5:1, 2.6:1, 2.7:1, 2.8:1, 2.9:1, or 3:1. By further controlling the ratio of the surface areas of the two within the above range, the dispersion and adsorption of the conductive agent on the surface of the lithium replenishment agent are facilitated, to further promote the coating of the lithium replenishment agent particles by the conductive agent, reduce the internal defects of the conductive network, and further increase the electronic conductivity of the lithium replenishment layer, which can be embodied by the rate performance of the final battery. Additionally, the dispersion of the conductive agent and the lithium replenishment agent is further improved, which further improves the mechanical strength of the lithium replenishment layer and promotes the cycle stability of the battery.

In some embodiments of the present disclosure, the lithium replenishment agent has a D50 ranging from 1 µm to 15 µm. In the present disclosure, D50 refers to the particle size when the cumulative particle size distribution in percentage of the sample reaches 50%. For example, the D50 of the lithium replenishment agent may be 1.0 µm, 2.0 µm, 5.0 µm, 8.0 µm, 10.0 µm, 12.0 µm, or 15.0 µm. By controlling the particle size of the lithium replenishment agent within the above range, the delithiation of lithium ions is facilitated, the control ofthe density (orporosity) of the lithium replenishment layer is promoted, and the lithium replenishment layer is ensured to have a good mechanical strength. More importantly, the coating of the conductive agent is promoted, to form a more complete conductive network in the lithium replenishment layer. Additionally, after delithiation, the particle size of the lithium replenishment agent becomes smaller due to delithiation or rupture. In view of this, by controlling the particle size in the above range, the particle size of the residue after delithiation of the lithium replenishment agent has little change, and the risk of influence on the ion conduction and electron conduction due to the presence of voids in the lithium replenishment layer is reduced, thus well reducing the resistivity of the lithium replenishment layer after delithiation. This is beneficial to the rate performance of the battery. In the embodiments of the present disclosure, the D50 of the lithium replenishment agent can be measured by a laser particle size analyzer.

In some embodiments of the present disclosure, the content in percent by weight of the lithium replenishment agent in the lithium replenishment layer ranges from 40% to 80%. For example, the content in percent by weight of the lithium replenishment agent in the lithium replenishment layer maybe 40%, 42%, 45%, 48%, 50%, 52%, 55%, 58%, 60%, 62%, 65%, 68%, 70%, 72%, 75%, or 78%. An appropriate amount of the lithium replenishment agent can ensure the lithium replenishment effect, and set aside enough shares for other components (for example, conductive agent). Therefore, the lithium replenishment layer has good electrical conductivity and mechanical strength, and the ratio of the surface areas of the two in the lithium replenishment layer is controlled in a suitable range.

In some embodiments of the present disclosure, the lithium replenishment agent comprises, but is not limited to, at least one of LiₓA_{y} and/or a lithium metal oxide, where x>0, 0<y≤3, and the element A comprises at least one of C, N, O, P and S. The lithium metal oxide comprises at least one of Li₂M¹O₂, Li₂M²O₃, Li₅FeₐM³₁₋ₐO₄, Li₆Mn_{b}M⁴_{1-b}O₄, and Li₅M⁵O₄, where M¹ comprises at least one of Ni, Mn, Cu, Fe, Cr, and Mo; M² comprises at least one of Ni, Mn, Fe, Mo, Zr, Si, Cu, Cr and Ru; M³ comprises at least one of Al, Nb, Co, Mn, Ni, Mo, Ru, and Cr, and 0≤a≤1; M⁴ comprises at least one of Ni, Fe, Cu, and Ru, and 0≤b≤1; and M⁵ comprises at least one ofNi, Mn, Fe, Mo, Zr, Si, Cu and Cr. LiₓA_{y} may be, but is not limited to, Li₃N, Li₂C₂, Li₂S, Li₂O, Li₂CO₃, Li₂C₂O₄, or Li₃P. The lithium replenishment agent comprises, but is not limited to, a mixture of the above materials.

In some specific embodiments, when the lithium replenishment layer is arranged between the current collector and the electrode material layer, the lithium replenishment agent is selected from the above lithium metal oxide. Further, in some specific embodiments, the lithium replenishment agent is at least one selected from Li₂M¹O₂, Li₂M²O₃, Li₅FeₐM³₁₋ₐO₄, and Li₅M⁵O₄. Therefore, the residue after delithiation of the lithium replenishment agent is an oxide of metal element M¹, M², M³, M⁴ corresponding to Li₂M¹O₂, Li₂M²O₃, Li₅FeₐM³₁₋ₐO₄, and Li₅M⁵O₄. The oxides of the above metal elements are electrochemically inert, which is combined with the conductive agent, to form an electrically conductive, but non-lithiated electrochemically inert layer between the current collector and the electrode material layer, which can improve the safety performance of the battery, and avoid the hindrance for the lithium ion transport during the charging and discharging cycle, to improve the rate performance of the battery.

In some embodiments of the present disclosure, the size of the conductive agent in at least one dimension is less than or equal to 200 nm. For example, the size of the conductive agent in at least one dimension may be 5 nm, 10 nm, 15 nm, 20 nm, 25 nm, 50 nm, 60 nm, 70 nm, 80 nm, 90 nm, 100 nm, 120 nm, 150 nm, 180 nm, or 190 nm. Therefore, the establishment of the conductive network in the lithium replenishment layer is facilitated, to reduce the internal defects of the conductive network, and ensure that the lithium replenishment layer retains a high conductivity before/after delithiation. In the embodiments of the present disclosure, the size of the conductive agent can be observed under a scanning electron microscope (SEM).

In some embodiments of the present disclosure, the conductive agent comprises, butis notlimited to, porous carbon, acetylene black, carbonnanotubes, carbon black (for example, Super P), ketjen black, graphene, and Mxenes. Porous carbon comprises, but is not limited to, at least one of nanoporous carbon and ordered porous carbon. In some specific embodiments, the conductive agent is at least one selected from porous carbon, Super P, acetylene black, carbon nanotubes, carbon black, ketjen black, graphene, or Mxenes, having a size of less than or equal to 200 nm in at least one dimension.

In some embodiments of the present disclosure, the content in percent by weight of the conductive agent in the lithium replenishment layer ranges from 1.5% to 15%. For example, the content in percent by weight of the conductive agent in the lithium replenishment layer may be 1.5%, 2.0%, 3.0%, 5.0%, 8.0%, 10.0%, 11.0%, 12.0%, 13.0%, 14.0%, or 14.5%. An appropriate amount of the conductive agent can ensure a good conductivity of the lithium replenishment layer, and a full contact with the lithium replenishment agent, to build a good conductive network in the lithium replenishment layer.

In some embodiments of the present disclosure, in the lithium replenishment layer, the weight ratio of the conductive agent to the lithium replenishment agent is in the range of 1 :(3-50). In some specific embodiments, in the lithium replenishment layer, the weight ratio of the conductive agent to the lithium replenishment agent is in the range of 1 :(5-20). When the total surface area of the conductive agent and the total surface area of the lithium replenishment agent are definite, the controlling of the weight ratio of the two within the above range requires controlling the surface area (or particle size) of the particles of the two within suitable ranges. As such, the particles of the lithium replenishment agent can be fully wrapped by the conductive agent with good uniformity, such that the lithium replenishment layer not only achieve a desirable lithium replenishment effect, but also has a good conductivity, to promote the comprehensive performance of the battery. For example, the weight ratio of the conductive agent to the lithium replenishment agent may be, but is not limited to, 1:3, 1:5, 1:8, 1:10, 1:12, 1:15, 1:18, 1:20, 1:22, 1:25, 1:28, 1:30, 1:32, 1:35, 1:38, 1:40, 1:42, 1:45, 1:48, or 1:50.

In some embodiments of the present disclosure, the lithium replenishment layer further comprises a binder. In some specific embodiments, the content in percent by weight of the binder in the lithium replenishment layer ranges from 2% to 15%. For example, the content in percent by weight of the binder in the lithium replenishment layer may be 2%, 3%, 4%, 5%, 6%, 7%, 8%, 9%, 10%, 11%, 12%, 13%, or 14%. A suitable binder can ensure the structural stability of the lithium replenishment layer. It can be understood that in a conventional practice in the art, the lithium replenishment layer is obtained by coating a lithium replenishment slurry on the surface of the current collector and/or the electrode material layer. An appropriate amount of the binder is also beneficial to the formation of the lithium replenishment layer.

In some embodiments of the present disclosure, the binder comprises, but is not limited to, at least one of polyvinylidene fluoride, polyvinyl alcohol, and polytetrafluoroethylene, polyethylene, polypropylene, polyacrylonitrile, polyacrylic acid, sodium alginate and styrenebutadiene rubber.

In some embodiments of the present disclosure, the lithium replenishment layer further comprises a dispersant. In some specific embodiments, the content in percent by weight of the dispersant in the lithium replenishment layer ranges from 0.3% to 10%. For example, the content in percent by weight of the dispersantin the lithium replenishment layer may be 0.3%, 0.5%, 1.0%, 2.0%, 5.0%, 8.0%, or 10.0%. An appropriate amount of the dispersant facilitates the dispersion of the conductive agent, to further facilitate the establishment of the conductive network in the lithium replenishment layer. In some specific embodiments, the weight of the dispersant ranges from 5% to 60% by weight of the conductive agent. For example, the weight of the dispersantis 5%, 10%, 15%, 20%, 25%, 30%, 35%, 40%, 45%, 50%, or 55% by weight of the conductive agent.

In some embodiments of the present disclosure, the dispersant comprises, but is not limited to, at least one of polyvinylpyrrolidone (PVP), sodium dodecyl sulfate (SDS), a perfluoroalkyl ether alcohol amine salt, a perfluoroalkyl ether quaternary ammonium salt, cetyltrimethyl ammonium bromide (CTAB), dodecyl trimethyl ammonium bromide, and dodecyl pyridinium bromide.

In some embodiments of the present disclosure, the lithium replenishment layer comprises 40% to 80% by weight of the lithium replenishment agent, 1.5% to 15% by weight of the conductive agent, 2% to 15% by weight of the binder, and 0.3% to 10% by weight of the dispersant.

It can be understood that similar to the electrode material layer, the lithium replenishment layer can also be prepared by a wet process. In other words, the lithium replenishment layer can be obtained by coating a lithium replenishment slurry on the surface of the current collector and/or the electrode material layer, and drying. To improve the uniformity of the lithium replenishment layer, and adjust the thickness and porosity to a more suitable range, the property of the lithium replenishment slurry is controlled within a suitable range. Since the lithium replenishment layer is obtained by drying the lithium replenishment slurry, the original lithium replenishment slurry can be reconstituted by scraping a certain amount of the lithium replenishment layer and dissolving it in a solvent. Specifically, the material of the lithium replenishment layer is scraped, and dispersed in a solvent, to preparing slurries with different solid contents respectively. The viscosity of each slurry is tested by a rheometer at a shear rate of 50/s at 25°C. The slurry with a solid content of 10% has a viscosity ranging from 150mPa s to 400 mPa s at room temperature. The slurry with a solid content of 16% has a viscosity ranging from 200 mPa·s to 500 mPa·s atroom temperature. The slurry with a solid content of 20% has a viscosity ranging from 300 mPa·s to 650mPa·s at room temperature. The slurry with a solid content of 25% has a viscosity ranging from 400 mPa·s to 1000 mPa·s at room temperature. The slurry with a solid content of 30% has a viscosity ranging from 480 mPa·s to 1500 mPa·s at room temperature. In the embodiments of the present disclosure, the solvent may be water, N-methylpyrrolidone, N,N-dimethylformamide, ethanol, isopropanol, acetone, tetrahydrofuran, dimethylformamide, toluene or n-hexane.

For example, the material of the lithium replenishment layer is dispersed in a solventto obtain a slurry. The slurry with a solid content of 10%has, without limitation, a viscosity of 150 mPa·s, 180 mPa·s, 200 mPa·s, 250 mPa·s, 300 mPa·s, 350 mPa·s, 380 mPa·s, or 400 mPa·s at room temperature. The slurry with a solid content of 16% has, without limitation, a viscosity of 200 mPa·s, 250 mPa·s, 300 mPa·s, 350 mPa·s, 400 mPa·s, 450 mPa·s, or 500 mPa·s at room temperature. The slurry with a solid content of 20% has, without limitation, a viscosity of 300 mPa·s, 350 mPa·s, 400 mPa·s, 450 mPa·s, 500 mPa·s, 550 mPa·s, 600 mPa·s, or 650 mPa·s at room temperature. The slurry with a solid content of 25% has, without limitation, a viscosity of 400 mPa·s, 450 mPa·s, 500 mPa·s, 550 mPa·s, 600 mPa·s, 650 mPa·s, 700 mPa·s, 750 mPa·s, 800 mPa·s, 850 mPa·s, 900 mPa·s, 950 mPa·s, or 1000 mPa·s at room temperature. The slurry with a solid content of 30% has, without limitation, a viscosity of 480 mPa·s, 500 mPa·s, 600 mPa·s, 700 mPa·s, 800 mPa·s, 900 mPa·s, 1000 mPa·s, 1100mPa·s, 1200 mPa·s, 1300 mPa·s, 1400mPa·s, or 1500 mPa s at room temperature.

In some embodiments of the present disclosure, within 72 hrs, the slurry has a viscosity change rate of less than 23% at room temperature and a change rate of light intensity backscattered by the slurry of less than 10%. That is, within 72 hrs immediately after the preparation of the lithium replenishment slurry, the slurry has a viscosity change rate of less than 23% at room temperature and a change rate of light intensity backscattered by the slurry of less than 10%. For example, at the time when the lithium replenishment slurry is just prepared, the viscosity is A₀, and the light intensity backscattered by the slurry is determined by a multiple light scattering detector to be B₀. After the lithium replenishment slurry is allowed to stand at room temperature for 72 hrs, the viscosity is A₁, and the light intensity backscattered by the slurry is determined by a multiple light scattering detector to be B₁. Viscosity change rate at room temperature = (A₀-A₁)/A₀. Change rate of light intensity backscattered =(B₀-B₁)/B₀. For example, the viscosity change rate of the slurry at room temperature within 72 hrs may be 1%, 2%, 5%, 8%, 10%, 12%, 15%, 18%, 20%, 21%, or 22%. For example, the change rate of light intensity backscattered by the slurry within 72 hrs may be 0.1%, 0.5%, 1.0%, 1.5%, 2.0%, 2.5%, 3.0%, 3.5%, 4.0%, 4.5%, 5.5%, 6.0%, 6.5%, 7.0%, 7.5%, 8.0%, 8.5%, 9.0%, or 9.5%. Therefore, these indicates thatthe components in the lithium replenishment layer according to the embodiment of the present disclosure, when exist in the form of a slurry, can be maintained stable over a long period of time, and is not prone to precipitation and easy to be prepared with a low manufacturing cost.

It is to be understood that in the embodiment of the present disclosure, "room temperature" the ambient temperature when the slurry is prepared. In the embodiments of the present disclosure, in many cases, the room temperature is 25±2°C.

In some embodiments of the present disclosure, the thickness of the lithium replenishment layer ranges from 1 µm to 15 µm. Particularly, when the electrode has the lithium replenishment layer on the two opposite side surfaces, the thickness of a single lithium replenishment layer ranges from 1 µm to 15 µm. For example, the thickness of the lithium replenishment layer may be 1 µm, 2 µm, 5 µm, 8 µm, 10 µm, 12 µm, or 15 µm. By controlling the thickness of the lithium replenishment layer within the above range, the amount of lithium replenished in the electrode can be controlled in a suitable range.

In some embodiments of the present disclosure, the porosity of the lithium replenishment layer ranges from 18% to 40%. Therefore, in a liquid-state secondary battery using an electrolyte solution, the lithium replenishment layer having such a porosity facilitates the infiltration of the electrolyte solution, makes the transport of active lithium ions smoother (that is, promote the exertion of the performance of the lithium replenishment agent), and allows the impedance ofthe lithium replenishment layer to be controlled within a suitable range. For example, the porosity of the lithium replenishment layer may be 18%, 20%, 22%, 25%, 28%, 30%, 32%, 35%, 38%, or 40%.

In some embodiments of the present disclosure, the thickness of the electrode material layer ranges from 40 µm to 120 µm. Particularly, when the electrode has the electrode material layer on the two opposite side surfaces, the thickness of a single electrode material layer ranges from 40 µm to 120 µm. For example, the thickness of the electrode material layer may be 40 µm, 50 µm, 60 µm, 70 µm, 80 µm, 90 µm, 100 µm, 110 µm, or 120 µm. Considering the thickness of the lithium replenishment layer and the use of the electrode, the control of the thickness of the electrode material in the above range promotes the exertion of the performance of the lithium replenishment agent and the performance of the battery, and particularly, the volumetric energy density of the battery.

It can be understood that the electrode material layer comprises an electrode material. In some embodiments of the present disclosure, in the electrode, the weight ratio of the lithium replenishment agent to the electrode material is (0.8-10):100. For example, the weight ratio of the lithium replenishment agent to the electrode material may be 0.8:100, 1:100, 1:50, 3:100, 1:25, 1:20, 3 :50, 7:100, 2:25, and 9:100. By controlling the ratio ofthe two within the above range, the exertion of the battery performance is facilitated, and choice can be made by those skilled in the art according to actual needs.

In some embodiments of the present disclosure, the electrode is a positive electrode; and the electrode material layer comprises a positive electrode material.

In an embodiment of the present disclosure, the positive electrode material layer comprises a positive electrode material, a binder, and a conductive agent. The positive electrode material, the binder, and the conductive agent can be selected from any materials known in the art, and choice can be made by those skilled in the art according to actual needs.

In the embodiments of the present disclosure, the positive electrode current collector may be any current collector for a positive electrode of the lithium secondary battery known in the art, which is not particularly limited in the present disclosure.

An embodiment of the present disclosure further provides a secondary battery, which comprises an electrode provided in the embodiment of the present disclosure. The secondary battery may be a liquid-state battery, or a solid-state battery. Due to the use of the electrode according to the embodiment of the present disclosure, the secondary battery has high energy density, a long cycle life, and good rate performance.

In some embodiments of the present disclosure, the secondary battery comprises a positive electrode, a negative electrode sheet, and a separator and an electrolyte solution arranged between the positive electrode and the negative electrode sheet. In the embodiments of the present disclosure, the negative electrode sheet may be any negative electrode sheet known in the art, which is not particularly limited in the present disclosure.

It can be understood that the lithium replenishment agent will be totally or partially delithiated during the formation of the battery. In the sub sequent charging and discharging cycle, the original lithium replenishment agent becomes a residue of the lithium replenishment agent, and the lithium replenishment layer also correspondingly becomes a material layer including the residue of the lithium replenishment agent and the conductive agent. Although the lithium replenishment agent is decomposed, in view of the special design according to the embodiment of the present disclosure, the structure of the lithium replenishment layer will not change obviously before and after delithiation. In the delithiated lithium replenishment layer, the ratio of the total surface area of the conductive agent to the total surface area of the residue of the lithium replenishment agent still meets (0.5-5):1, and the conductive agent can still form a conductive network in the above-mentioned material layer, to ensure thatthe lithium replenishment layer after delithiation can still transport electrons quickly. The battery has a good rate performance accordingly. Correspondingly, in some specific embodiments, in the electrode of the secondary battery, the ratio of the total surface area of the conductive agent to the total surface area of the residue of the lithium replenishment agent is in the range of (0.8-3):1. In some embodiments of the present disclosure, in the delithiated lithium replenishment layer, the content in percent by weight of the residue of the lithium replenishment agent ranges from 40% to 93%, and the content in percent by weight of the conductive agent ranges from 5% to 30%. For example, the content in percent by weight of the residue of the lithium replenishment agent may be 40%, 42%, 45%, 50%, 55%, 60%, 65%, 70%, 75%, 80%, 85%, 90%, 91%, 92%, or 93%. For example, the content in percent by weight of the conductive agent may be 5%, 8%, 10%, 12%, 15%, 18%, 20%, 22%, 25%, or 28%.

In the embodiments of the present disclosure, the ratio of surface areas of the residue of the lithium replenishment agent to the conductive agent in the delithiated lithium replenishment layer is determined by the same method as that for the ratio of the total surface area of the conductive agent to the total surface area of the lithium replenishment agent in the lithium replenishment layer as described above.

An embodiment of the present disclosure further provides an electric device, which comprises a secondary battery provided in the embodiment of the present disclosure. As the secondary battery provided in the embodiment of the present disclosure is used to power to the electric device, the electric device has a long battery life, and also certain fast charging performance, thus having high market competitiveness.

In some embodiments of the present disclosure, the electric device comprises, but is not limited to, 3C-type electronic devices, and electric vehicles including, but is not limited to, new energy vehicles, and force-helping bicycles, etc.

The technical solution of the present disclosure will be further described by way of examples.

### Example 1

A positive electrode comprises a current collector (specifically, an aluminum foil), and a lithium replenishment layer and a positive electrode material layer sequentially laminated on a surface of the current collector. The lithium replenishment layer has a single-layer thickness of 3 µm, and the positive electrode material layer has a single-layer thickness of 88 µm.

The lithium replenishment layer comprises 75.5 wt% of a lithium replenishment agent (specifically, Li₅FeO₄), 4.2 wt.% of a conductive agent (specifically, acetylene black), 14.5 wt.% of a binder (specifically, polyvinylidene fluoride), and 5.8 wt.% of a dispersant (specifically, PVP). The acetylene black has a particle size distribution ranging from 25 nm to 125 nm, the lithium replenishment agent has a D50 of 5 µm, and the ratio of the total surface area of the conductive agent to the total surface area of the lithium replenishment agent is 2.0. The residue of the lithium replenishment agent after delithiation accounts for 67.95% by weight in the delithiated lithium replenishment layer.

The positive electrode is prepared as follows.
(1) Preparation of conductive slurry: A conductive agent (specifically, acetylene black) and a dispersant (specifically, PVP) are weighed and dissolved in a solvent, milled in a ball mill, and prepared into a mother liquor with the conductive agent of 20 wt%;
(2) Preparation of binder solution: A binder (specifically, polyvinylidene fluoride) is added to a solvent in multiple portions, and stirred for 5 min after each addition, until the binder is completely added, to prepare a binder solution with a mass fraction of 10 wt%.
(3) Preparation of conductive adhesive solution: According to the ratio of the conductive agent, the binder, and the dispersant in the lithium replenishment layer, the conductive slurry in Step (1) and the adhesive solution in Step (2) are taken, and stirred for 20 to 60 min, to obtain a conductive adhesive solution.
(4) Preparation of lithium replenishment slurry: According to the ratio of the lithium replenishment agent, the conductive agent, the binder, and the dispersant in the lithium replenishment layer, an amount of the lithium replenishment agent is taken, added to the conductive binder solution prepared in Step (3), and stirred.

### Example 2

Example 2 differs from Example 1 only in thatthe particle size D50 of the lithium replenishment agent is 10 µm, and the ratio of the total surface area of the conductive agent to the total surface area of the lithium replenishment agent is 2.8.

### Example 3

Example 3 differs from Example 1 only in thatthe particle size D50 of the lithium replenishment agent is 4 µm, and the ratio of the total surface area of the conductive agent to the total surface area of the lithium replenishment agent is 1.5.

### Example 4

Example 4 differs from Example 1 only in thatthe particle size D50 of the lithium replenishment agent is 3 µm, and the ratio of the total surface area of the conductive agent to the total surface area of the lithium replenishment agent is 1.2.

### Example 5

Example 5 differs from Example 1 in that the conductive agent is replaced by graphite having a particle size ranging from 220 nm to 300 nm, and the ratio of the total surface area of the conductive agent to the total surface area of the lithium replenishment agent is 0.6.

### Example 6

Example 6 differs from Example 1 in that the lithium replenishment layer comprises 95.3 wt% of the lithium replenishment agent, 1.2 wt.% of the conductive agent, 2.5 wt.% of the binder, and 1 wt.% of the dispersant. The ratio of the total surface area of the conductive agent to the total surface area of the lithium replenishment agent is 0.5. The residue of the lithium replenishment agent after delithiation accounts for 85.77% by weight in the delithiated lithium replenishment layer.

### Example 7

Example 7 differs from Example 1 in that the thickness of the lithium replenishment layer is 16 µm, and the thickness of the positive electrode material layer is 125 µm.

### Example 8

Example 8 differs from Example 2 in that the content in percent by weight of the lithium replenishment agent is 78.1%, and the contentin percent by weight of the conductive agent is 1.6%. The ratio of the total surface area of the conductive agent to the total surface area of the lithium replenishment agent is 0.8. The residue of the lithium replenishment agent after delithiation accounts for 70.29% by weight in the delithiated lithium replenishment layer.

### Example 9

Example 9 differs from Example 1 only in that in the lithium replenishment layer, the particle size distribution of the acetylene black is in the range of 120 to 200 nm, the particle size D50 of the lithium replenishment agent is 1.0 µm, and the ratio of the surface areas of the conductive agent to the lithium replenishment agent is 0.6.

To highlight the beneficial effects of the embodiments of the present disclosure, the following comparative examples are provided.

### Comparative Example 1

Comparative Example 1 differs from Example 1 only in that the lithium replenishment layer is replaced by a conductive layer having a thickness of 3 µm, and the conductive layer comprises the conductive agent, the binder, and the dispersant at a weight ratio of 1 :2:0.8.

### Comparative Example 2

Comparative Example 2 differs from Example 1 only in that in the lithium replenishment layer, the particle size distribution of acetylene black is in the range of 20 to 40 nm, the particle size D50 of the lithium replenishment agent is 20 µm, and the ratio of the surface areas of the conductive agent to the lithium replenishment agent is 14.

### Comparative Example 3

Comparative Example 3 differs from Example 1 only in thatthe particle size D50 of the lithium replenishment agent is 5 µm, the particle size distribution of the conductive agent is in the range of 220 to 500 nm, and the ratio of the total surface area of the conductive agent to the total surface area of the lithium replenishment agent is 0.4.

### Performance test

(1) The material of the lithium replenishment layer on the positive electrode is scraped, and dispersed in N-methylpyrrolidone, to prepare a slurry with a solid content of 10%. The viscosity ofthe slurry is tested by a rheometer at a shearrate of 50/s at 25°C. The solid content of the slurry is tested by loss on drying method as follows. A portion of the slurry is dried at 160°C to give a dry material with a constant weight and weighed, and the solid content is calculated.
(2) Test of change rate of light intensity backscattered: The test is carried out using a multiple light scattering detector.
(3) Peeling strength test of positive electrode: The test is carried out using a universal tensile tester. Each positive electrode is cutto a stripe with a width of 40 mm and a length of 150-200 mm, and the peel strength is tested at a peeling angle of 180.
(4) Electrochemical performance test:
   Preparation of test batteries: The positive electrodes of the above examples and comparative examples are respectively assembled with a negative electrode sheet to form the test batteries. The negative electrode sheet comprises a current collector (specifically a copper foil) and a negative electrode material layer arranged on the surface of the current collector. The negative electrode material layer contains graphite, a conductive agent, and a binder at a weight ratio of 95:3:2. The electrolyte solution is an organic solution containing 1.2 mol/L lithium hexafluorophosphate, where the solvent is EC:DMC:EMC at a weight ratio of 1:1:1. After the formation, test batteries of various examples and comparative examples are obtained. Formation process: The battery is charged at 0.05C for 3 hrs, allowed to stand for 10 min, and charge to 3.8 V at 0.2C.

In the present disclosure, the residue after delithiation refers to the residue of the lithium replenishment agent after the above formation process.

Rate performance test: The change of the capacity per gram upon discharge of each battery with the number of cycles is tested at 25°C at various rates including 0.5C and 3C, over a voltage ranging from 2.5 V to 3.8 V When the capacity per gram is calculated, the ratio of the discharge capacity to the weight of the positive electrode active material at a certain current density is regarded as the capacity per gram upon discharge at this current density. Table 1 summarizes the ratio (3C/0.5C) of the first-cycle discharge capacity of each battery at 3c rate to that at 0.5c.

Cycle life: At 25±1°C, the battery is charged at0.33C and dischargedat0.5CPfor charge-discharge cycle test. The steps are as follows. The battery is allowed to stand for 10 min; constant-current charged to 3.8 V at 0.5C, and then constant-voltage charged to 0.05C cut-off; allowed to stand for 10 min; and then constant-power discharged to 2.5V at 0.5CP. This is 1 cycle. These steps are repeated. The number of cycles when the capacity retention rate of the battery is 80%, that is, the cycle life of the battery, is determined.

Energy density: In addition, the discharge curve in the charge-discharge curve obtained by constant-current charging and discharging each battery at 0.1C is integrated and divided by the first-cycle discharge capacity, to obtain the average voltage of each battery, that is, the charging and discharging voltage plateau. Then the gravimetric energy density of each battery is calculated according to the following formula:

Gravimetric energy density = graded capacity x average voltage plateau/battery weight. The results are summarized in Table 1 below.

**Table 1**

| Case | Viscosity of slurry at room temperature/mPa·s | Viscosity change rate of slurry at 72 h/% | Change rate of light intensity backscattered by slurry at 72h/% | Cycle life of battery (80% cut-off) | Energy density of battery (Wh/kg) | 3C/0.5C | Peeling strength of positive electrode (N/40 mm) |
|---|---|---|---|---|---|---|---|
| Example 1 | 630 | 8.7 | 5.7 | 4020 | 213 | 94.7 | 1.29 |
| Example 2 | 580 | 9.3 | 6.3 | 3350 | 208 | 93.9 | 0.89 |
| Example 3 | 660 | 10.3 | 7.0 | 3510 | 207 | 93.1 | 0.87 |
| Example 4 | 550 | 11.8 | 8.7 | 3230 | 205 | 92.7 | 0.76 |
| Example 5 | 440 | 18 | 10.4 | 3180 | 203 | 91.4 | 0.53 |
| Example 6 | 380 | 15.8 | 8.7 | 3440 | 199 | 90.3 | 0.65 |
| Example 7 | 620 | 8.8 | 5.9 | 3550 | 193 | 91.7 | 0.54 |
| Example 8 | 2340 | 18.9 | 6.4 | 2960 | 201 | 90.2 | 1.25 |
| Example 9 | 680 | 19.5 | 11.9 | 3080 | 201 | 89.3 | 0.50 |
| Comparative Example 1 | 1530 | 25.8 | 25.7 | 2230 | 180 | 83.9 | 0.38 |
| Comparative Example 2 | 980 | 27.9 | 13.0 | 2890 | 198 | 88.9 | 0.45 |
| Comparative Example 3 | 640 | 19.0 | 9.3 | 2800 | 208 | 90.2 | 0.48 |

As can be seen from the data in Table 1, the electrode provided in the embodiment of the present disclosure can effectively improve the comprehensive electrochemical performance of the final battery.

Exemplary embodiments of the present disclosure have been described above. It should be noted that several improvements and modifications can be made by those of ordinary skill in the art without departing from the principle of the present disclosure, which shall fall within the protection scope of the present disclosure.

## Claims

1. An electrode, comprising a lithium replenishment layer,
wherein the lithium replenishment layer comprises a lithium replenishment agent and a conductive agent, and a ratio of a total surface area of the conductive agent in the lithium replenishment layer to a total surface area of the lithium replenishment agent in the lithium replenishment layer is (0.5-5):1.

2. The electrode according to claim 1, wherein the ratio of the total surface area of the conductive agent to the total surface area of the lithium replenishment agent is (0.8-3):1.

3. The electrode according to claim 1 or 2, wherein in the lithium replenishment layer, a content in percent by weight of the lithium replenishment agent ranges from 40% to 80%, and a content in percent by weight of the conductive agent ranges from 1.5% to 15%.

4. The electrode according to any one of claims 1 to 3, wherein in the lithium replenishment layer, a weight ratio of the conductive agent to the lithium replenishment agent is in the range of 1:(3-50).

5. The electrode according to any one of claims 1 to 4, wherein the lithium replenishment layer further comprises a binder and a dispersant; and in the lithium replenishment layer, a content in percent by weight of the binder ranges from 2% to 15%, and a content in percent by weight of the dispersant ranges from 0.3% to 10%.

6. The electrode according to any one of claims 1 to 5, wherein the lithium replenishment agent has a D50 ranging from 1 µm to 15 µm.

7. The electrode according to any one of claims 1 to 6, wherein a size of the conductive agent in at least one dimension is less than or equal to 200 nm.

8. The electrode according to any one of claims 1 to 7, wherein the lithium replenishment layer meets the conditions that a slurry obtained by dispersing a material of the lithium replenishment layer in a solvent
has a viscosity change rate of less than 23% within 72 hrs; and/or
has a change rate of light intensity backscattered by the slurry of less than 10% at room temperature within 72 hrs, where the solvent is at least one selected from water, N-methylpyrrolidone, N,N-dimethylformamide, ethanol, isopropanol, acetone, tetrahydrofuran, dimethylformamide, toluene, or n-hexane.

9. The electrode according to any one of claims 1 to 8, wherein the lithium replenishment layer meets at least one of:
(1) the slurry with a solid content of 10% obtained by dispersing the material of the lithium replenishment layer in a solvent has a viscosity ranging from 150mPa·s to 400 mPa·s at room temperature;
(2) the slurry with a solid content of 16% obtained by dispersing the material of the lithium replenishment layer in a solvent has a viscosity ranging from 200 mPa·s to 500 mPa·s at room temperature;
(3) the slurry with a solid content of 20% obtained by dispersing the material of the lithium replenishment layer in a solvent has a viscosity ranging from 300 mPa·s to 650 mPa·s at room temperature;
(4) the slurry with a solid content of 25% obtained by dispersing the material of the lithium replenishment layer in a solvent has a viscosity ranging from 400 mPa·s to 1000 mPa·s at room temperature; and
(5) the slurry with a solid content of 30% obtained by dispersing the material of the lithium replenishment layer in a solvent has a viscosity ranging from 480 mPa·s to 1500 mPa·s at room temperature,
wherein the solvent is at least one selected from water, N-methylpyrrolidone, N,N-dimethylformamide, ethanol, isopropanol, acetone, tetrahydrofuran, dimethylformamide, toluene, or n-hexane.

10. The electrode according to any one of claims 1 to 8, further comprising a current collector and an electrode material layer, the lithium replenishment layer, the electrode material layer, and the current collector being laminated, preferably wherein a thickness of the lithium replenishment layer ranges from 1 µm to 15 µm, and a thickness of the electrode material layer ranges from 40 µm to 120 µm.

11. The electrode according to any one of claims 1 to 10, wherein the electrode is a positive electrode.

12. The electrode according to any one of claims 1 to 11, wherein the lithium replenishment agent comprises at least one of LiₓA_{y} and a lithium metal oxide, wherein x>0, 0<y≤3, and the element A comprises at least one of C, N, O, P and S; the lithium metal oxide comprises at least one of Li₂M¹O₂, Li₂M²O₃, Li₅FeₐM³₁₋ₐO₄, Li₆Mn_{b}M⁴_{1-b}O₄, and Li₅M⁵O₄, wherein M¹ comprises at least one of Ni, Mn, Cu, Fe, Cr, and Mo; M² comprises at least one ofNi, Mn, Fe, Mo, Zr, Si, Cu, Cr and Ru; M³ comprises at least one of Al, Nb, Co, Mn, Ni, Mo, Ru, and Cr, and 0≤a≤1; M⁴ comprises at least one ofNi, Fe, Cu, and Ru, and 0≤b≤1; and M⁵ comprises at least one ofNi, Mn, Fe, Mo, Zr, Si, Cu, and Cr; and
optionally, LiₓA_{y} comprises at least one of Li₃N, Li₂C₂, Li₂S, Li₂O, Li₂CO₃, Li₂C₂O₄, and Li₃P.

13. The electrode according to any one of claims 1 to 12, wherein the conductive agent comprises at least one of porous carbon, acetylene black, carbon nanotubes, carbon black, ketjen black, graphene, and Mxenes.

14. A secondary battery, comprising an electrode according to any one of claims 1 to 13, preferably wherein in the lithium replenishment layer of the electrode where the lithium replenishment agent is delithiated, a content in percent by weight of the residue after delithiation of the lithium replenishment agent ranges from 40% to 93%, and a content in percent by weight of the conductive agent ranges from 5% to 30%.

15. An electric device, comprising a secondary battery according to claim 14.
